(19) Europäisches Patentamt / European Patent Office / Office européen des brevets

(11) **EP 4 167 607 B1**

(12) **EUROPEAN PATENT SPECIFICATION**

(45) Date of publication and mention
of the grant of the patent:
**19.02.2025 Bulletin 2025/08**

(21) Application number: **21202063.0**

(22) Date of filing: **12.10.2021**

(51) International Patent Classification (IPC):
*H04W 4/24* (2024.01)     *G08G 1/01* (2006.01)
*G08G 1/09* (2006.01)     *G08G 1/16* (2006.01)
*H04W 4/46* (2018.01)     *H04W 4/38* (2018.01)

(52) Cooperative Patent Classification (CPC):
**H04W 4/24; G08G 1/163; G08G 1/164;
G08G 1/166; G08G 1/167; H04W 4/46;** H04W 4/38

(54) **COOPERATIVE INTELLIGENT TRANSPORT SYSTEM AND METHOD WITH CPM INFORMATION SIGNIFICANCE LEVEL**

KOOPERATIVES INTELLIGENTES TRANSPORTSYSTEM UND VERFAHREN MIT CPM-INFORMATIONSSIGNIFIKANZNIVEAU

SYSTÈME ET PROCÉDÉ DE TRANSPORT INTELLIGENT COOPÉRATIF AVEC NIVEAU D'IMPORTANCE DES INFORMATIONS CPM

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**19.04.2023 Bulletin 2023/16**

(73) Proprietor: **DENSO CORPORATION
Kariya-city,
Aichi-pref., 448-8661 (JP)**

(72) Inventors:
• **LEINMÜLLER, Tim
85386 Eching (DE)**
• **MITTAL, Prachi
85386 Eching (DE)**

(74) Representative: **Winter, Brandl - Partnerschaft
mbB
Alois-Steinecker-Straße 22
85354 Freising (DE)**

(56) References cited:
EP-A2- 3 829 200     WO-A1-2020/257642
GB-A- 2 583 726

**EP 4 167 607 B1**

**Description**

The present invention relates to information exchange in a cooperative intelligent transport system (C-ITS), and more specifically to a method, a cooperative intelligent transport system and a computer-implemented system of exchanging information between stations in a C-ITS using a wireless communication channel. The information exchange comprises transmitting, receiving, processing and/or discarding a collective perception message (CPM) containing information about on-board sensors and/or objects and/or free-space detected by said on-board sensors within a traffic environment.

A known cooperative intelligent transport system (C-ITS) comprises of stations (e.g., vehicles and/or roadside units) that exchange information with each other using (direct) wireless communication, known as vehicle-to-x, or vehicle-to-everything, (V2X) (direct).

V2X is a generic term for traffic networking, electronic communication of road users with each other in the forms of vehicle-to-vehicle (V2V), vehicle-to-infrastructure (V2I), vehicle-to-network (V2N) and vehicle-to-pedestrian (V2P). Wireless communication can be based on the IEEE 802.11 WLAN standard (the 802.11p extension, and e.g., its European profile ITS-G5) and is specifically termed WLAN-V2X. Alternatively, the wireless communication can be based on the 3GPP standards, specifically termed Cellular-V2X, C-V2X, or sidelink. In V2X, for example, safety and traffic messages, emergency and service data, toll billing and navigation as well as Internet and database content are exchanged. The aims of V2V include notifying drivers of critical and dangerous situations at an early stage, improving the vehicles' awareness of their surroundings, supporting the vehicles' driver assistance systems, and supporting cooperative automated mobility, thereby improving traffic safety and optimizing traffic flow.

The ITS stations (ITS-Ss) in the C-ITS share CAMs (Cooperative Awareness Messages (CAMs) to inform each other about their own position, kinematics, and other data. The ITS stations use DENMs (Decentralized Environmental Notification Messages) to inform each other on dedicated events, such as hard braking or obstacles on the road.

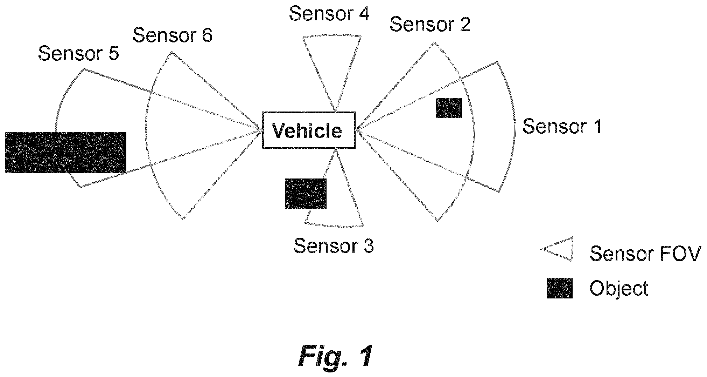

Another V2X message is the Collective Perception Message (CPM) that contains information about on-board sensors, such as field-of-views (FOVs), free-space, and the objects detected within the traffic environment by the on-board sensors of an ITS-S. Fig. 1 shows an example of a vehicle setup comprising a vehicle with sensors 1 to 6 each having a predetermined field-of-view. Exemplary objects are illustrated in the vicinity of the vehicle.

CPMs are sent out periodically and contain information on one or more detected objects, field-of-views and other characteristics of vehicle on-board sensors such as e.g., a radar, a camera and the like. CPMs are composed by the Collective Perception Service (CPS) within the facility layer of the ETSI ITS stack, as shown in Fig. 2 illustrating the ETSI ITS-Stack and CPS in a CPS-centric view. CPMs are composed and transmitted as per CPM generation rules of CPS. The current functions of CPS are illustrated in Fig. 3 and will be further referred to in connection with Fig. 4 below.

In C-ITS, a concept of Decentralized Congestion Control (DCC) is employed to handle a congested channel. DCC operates at all layers of the ETSI ITS stack.

In the technical field referred to so far, document DE 10 2015 1 057 84 A1 discloses, in a distributed system for detecting and protecting vulnerable road users, the sending of object information about vulnerable road users and controlling the transmission of this information based on object kinematics, novelty, detection possibility by others and the like.

In addition, document EP 3 462 754 A1 presents an apparatus and a method V2X communication arranged to detect if two objects are the same in order to avoid duplicating them in a CPM, document WO2021/040352 A1 discloses a method by which a device transmits and receives a CPM in wireless communication system for supporting sidelink, and a device therefor. In this method, it is detected if an object perceived by an ITS-S has already been transmitted by another ITS-S and sending out of such an object is avoided based thereon, and ETSI TS 102 636-4-2 V1.4.1 (2021-02) (GeoNetworking; Part 4: Geographical addressing and forwarding for point-to-point and point-to-multipoint communications; Sub-part 2: Media-dependent functionalities for ITS-G5) describes a Channel Busy Ratio (CBR) concept in GeoNetworking for ITS-G5. Further relevant prior art is disclosed in documents GB 2 583 726 A and EP 3 829 200 A2.

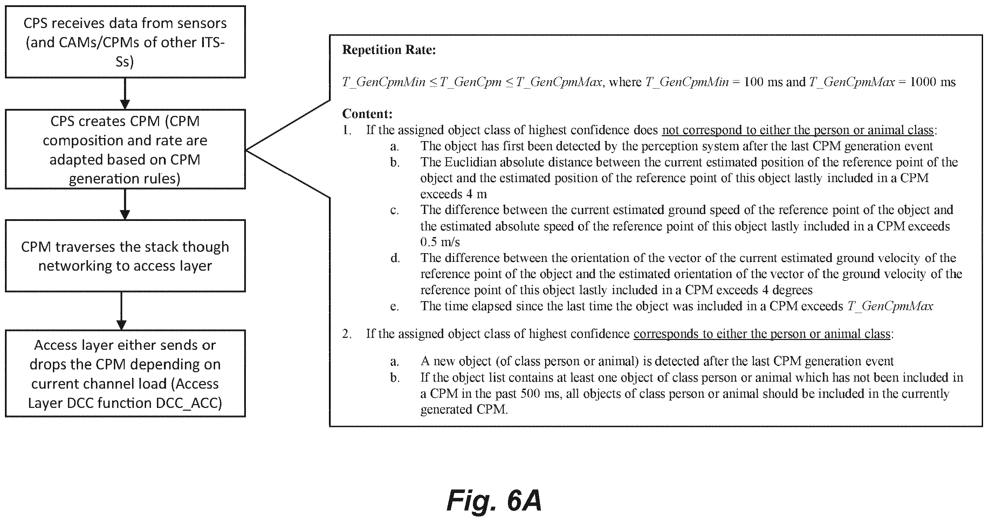

A CPM can contain a large number of detected objects, leading to a relatively large CPM size, so that even at a lower transmission rate, sending out CPMs can result in congestion of the V2X wireless channel. In a congested V2X wireless channel, DCC is executed at every ITS-S (at different layers of the ETSI ITS stack). DCC determines a certain channel capacity for the ITS-S, depending on the level of congestion. While this also limits the channel budget of the ITS-S for CPMs, however, an ITS-S cannot determine how many CPMs are on the channel and how significant its own CPM information is compared to the CPM information from other stations. The interlinking of CPM transmission and DCC is shown in Fig. 6A.

It is an object of the present invention to provide a method, a cooperative intelligent transport system and a computer-implemented system capable of assessing the significance of the information within an individual CPM for all the information available on a channel at one time.

This object is accomplished solved by the subject matters of claims 1, 9 and 10. Further aspects of the invention are defined in the subclaims.

**EP 4 167 607 B1**

The inventors of this invention conceived an object and CPM significance value concept using a method for exchanging information in a cooperative intelligent transport system between stations in the C-ITS that uses a wireless communication channel. The exchanging of information comprises transmitting, receiving, processing and/or discarding a CPM containing information about on-board sensors and/or objects detected by said on-board sensors within a traffic environment. The method comprises the steps of detecting a plurality of objects present within a FOV of at least one sensor provided at a respective station or included in a shared message received from another station as being present in the vicinity of the station, obtaining object data of each detected object from said at least one sensor and/or said shared message, filling a CPM with object data of the objects, calculating a collective perception message significance index (CSI; also termed CPM_SI) for each CPM filled with object data of the objects, determining available channel resources of said wireless communication channel, and transmitting CPMs in accordance with the available channel resources starting with a CPM with the highest CSI. In this method, the filling of the CPM with object data of the objects is, as a non-limiting example, based on the calculation of an object significance index (O-SI) for each detected object based on said object data, and filling a CPM with object data of the objects in accordance with their calculated object significance index. Then, the CSI is calculated by taking an average of O-SIs of all objects within the CPM. With this concept, it is possible to assess the significance of information within an individual CPM (with the help of O-SI and CSI parameters), but not for all the CPM information available on the channel at one time so that an overarching view of the entire system from the CPM information significance point of view is missing. The present invention builds on and further develops the above object and CPM significance value concept.

According to a first aspect of the present invention, a method for calculating a collective perception message (CPM) information significance level (ISL) in a C-ITS using a wireless communication channel for transmitting, receiving, processing and/or discarding a plurality of CPMs containing information about on-board sensors and/or objects detected by said on-board sensors within a traffic environment, comprises the steps of calculating a CSI value for each CPM filled with object data of the objects detected within a FOV of at least one sensor provided at an intelligent transport system station (ITS-S) or included in a shared message received from another ITS-S as being present in the communication range of the ITS-S, the step of calculating the ISL on the channel based on the CSI values for all received CPMs, and the step of sharing the calculated ISL with other ITS-Ss. The significance index (SI) is calculated by a collective perception service (CPS) based on data obtained at a host intelligent transport system station (ITS-S) about a detected object, wherein such data include at least one of kinematics, novelty, time elapsed since last update, classification, confidence of detection, and/or based on the need of other ITS-Ss, and the information significance level (ISL) comprises determining a local information significance level (ISL_L_0) on the channel from the message significance index (CSI) values for all received CPMs as a local zero-hop value by averaging the CSI values of all received CPMs within a predetermined time interval.

According to a second aspect of the present invention, which depends on the first aspect, the step of calculating the ISL comprises determining a local information significance level ISL_L_0 on the channel from the CSI values for all received CPMs as a local zero-hop value by averaging the CSI values of all received CPMs within a predetermined time interval. As used herein, "zero-hop" includes all ITS-Ss within a direction or direct radio communication range of an ITS-S. Likewise, "one-hop" then includes all ITS-Ss in the radio communication range of the zero-hop ITS-Ss in addition, and "two-hop" then includes all ITS-Ss in the radio communication range of the zero-hop ITS-Ss and the one-hop ITS-Ss in addition.

According to a third aspect of the present invention, which depends on the second aspect, first and second hop information significance levels ISL_L_1, ISL_L_2 are calculated, wherein the first hop information significance level ISL_L_1 is the highest received value calculated in a single-hop radius within the predetermined time interval from the local information significance levels ISL_L_0 and the second hop information significance level ISL_L_2 is the highest received value calculated in a two-hop radius within the predetermined time interval from the first hop information significance levels ISL_L_1.

According to a fourth aspect of the present invention, which depends on the third aspect, a global information significance level ISL_G is determined as ISL_G = max (ISL_L_0, ISL_L_1, ISL_L_2).

According to a fifth aspect of the present invention, which depends on the second aspect, the local information significance level (ISL_L_0) and a first hop information significance level (ISL_L_1) are included as ISL value(s) in a CPM management container, and a second hop information significance level (ISL_L_2) is not included in the CPM management container.

According to a sixth aspect of the present invention, which depends on any of the second to fifth aspects, the predetermined time interval has a default value of 1 second, the local information significance level ISL_L_0 and the first hop information significance level ISL_L_1 each have a value of 1 to 16 and a size of 1 byte.

According to a seventh aspect of the present invention, which depends on any of the first to sixth aspects, the ITS-S is a vehicle or a roadside unit (RSU).

According to an eighth aspect of the present invention, which depends on any of the first to seventh aspects, the wireless communication is direct vehicle-to-x (V2X) communication.

According to a ninth aspect of the present invention, a cooperative intelligent transport system for calculating a collective perception message (CPM) information significance level (ISL) in a cooperative intelligent transport system (C-ITS) using a wireless communication channel for transmitting, receiving, processing and/or discarding a plurality of CPMs containing information about on-board sensors and/or objects detected by said on-board sensors within a traffic environment comprises a calculating unit arranged to calculate a collective perception message significance index (CSI) value for each CPM filled with object data of the objects detected within a field of view (FOV) of at least one sensor provided at an intelligent transport system station (ITS-S) or included in a shared message received from another ITS-S as being present in the communication range of the ITS-S, and to calculate the information significance level (ISL) on the channel based on the CSI values for all received CPMs; and a sharing unit arranged to share the calculated ISL with other ITS-Ss. The significance index (SI) is calculated by a collective perception service (CPS) based on data obtained at a host intelligent transport system station (ITS-S) about a detected object, wherein such data include at least one of kinematics, novelty, time elapsed since last update, classification, confidence of detection, and/or based on the need of other ITS-Ss, and the information significance level (ISL) comprises determining a local information significance level (ISL_L_0) on the channel from the message significance index (CSI) values for all received CPMs as a local zero-hop value by averaging the CSI values of all received CPMs within a predetermined time interval.

According to a tenth aspect of the present invention, a computer-implemented system for calculating a collective perception message (CPM) information significance level (ISL) in a cooperative intelligent transport system (C-ITS) using a wireless communication channel for transmitting, receiving, processing and/or discarding a plurality of collective perception messages (CPMs) containing information about on-board sensors and/or objects detected by said on-board sensors within a traffic environment, comprises a memory for storing instructions which, when carried out by a processor, cause the processor to perform the steps of calculating a collective perception message significance index (CSI) value for each CPM filled with object data of the objects detected within a field of view (FOV) of at least one sensor provided at an intelligent transport system station (ITS-S) or included in a shared message received from another ITS-S as being present in the communication range of the ITS-S; calculating the information significance level (ISL) on the channel based on the CSI values for all received CPMs; and sharing the calculated ISL with other ITS-Ss. The significance index (SI) is calculated by a collective perception service (CPS) based on data obtained at a host intelligent transport system station (ITS-S) about a detected object, wherein such data include at least one of kinematics, novelty, time elapsed since last update, classification, confidence of detection, and/or based on the need of other ITS-Ss, and the information significance level (ISL) comprises determining a local information significance level (ISL_L_0) on the channel from the message significance index (CSI) values for all received CPMs as a local zero-hop value by averaging the CSI values of all received CPMs within a predetermined time interval.

It is understood that the above second to eighth aspects are likewise applicable to the systems according to the ninth and tenth aspects of the present invention.

The present invention is designed to advantageously provide for a consideration of additional parameters (e.g. detection confidence, location discrepancy etc.) for significance determination, a consideration of any type of objects (not just e.g. VRUs), a consideration of any type of ITS-S (not just e.g. vehicles), a consideration of Area perception Requests (APR), a transmission of the significance parameter itself, a selective aggregation of objects (as opposed to single message per object, or aggregation of all detected objects in one message), and a consideration of a specific V2X message (CPM).

In the above concept, it is understood that in case of limited processing capacity, an arrangement is preferably such that that at least received CPMs with a high CSI are processed first.

As further understood, in the above context and without being limited thereto, ITS-Ss at least comprise vehicles and/or roadside units in the traffic environment the afore-mentioned aspects are applicable to.


Brief Description of the Drawings

Hereinafter, the present invention is described more in detail with reference to the drawings and the corresponding detailed description, wherein:

Fig. 1 illustrates an exemplary vehicle setup in which a vehicle is equipped with sensors each having a predetermined field-of-view and exemplary environmental objects are located in the vicinity of the vehicle;

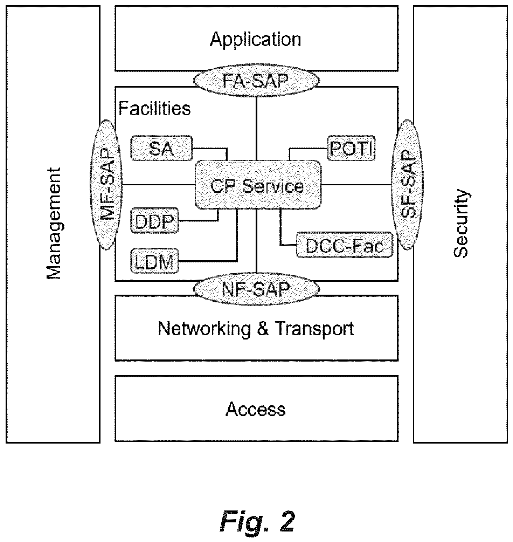

Fig. 2 illustrates the ETSI ITS-Stack and CPS in a CPS-centric view;

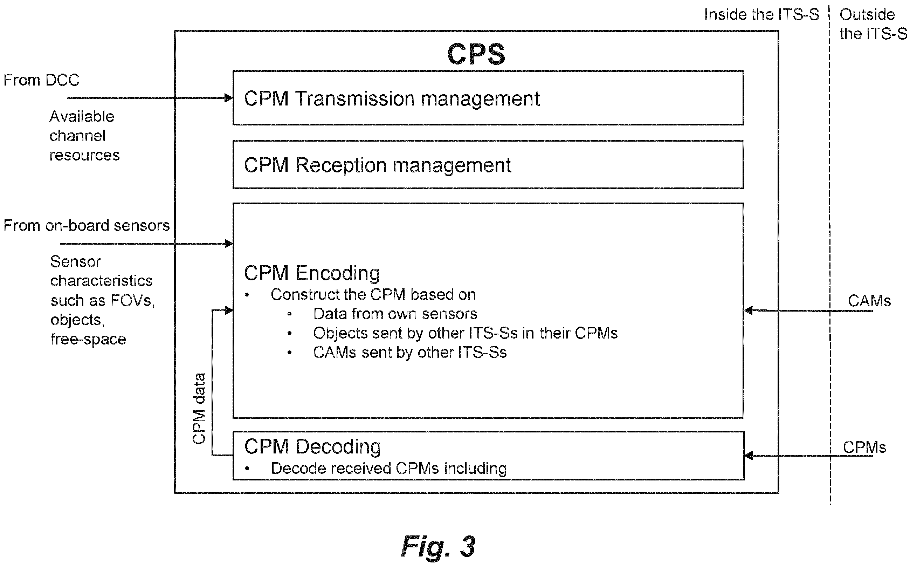

Fig. 3 illustrates functions of the CPS of Fig. 2 as specified in current ETSI standards;

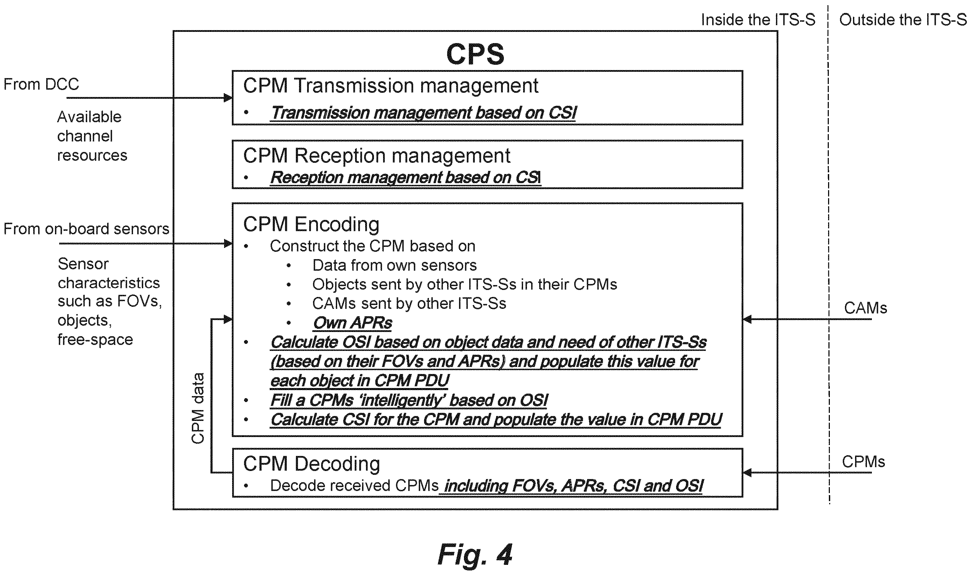

Fig. 4 illustrates, in comparison to Fig. 3, changes to CPS functions introduced by the concept of a significance index introduced into CPM;

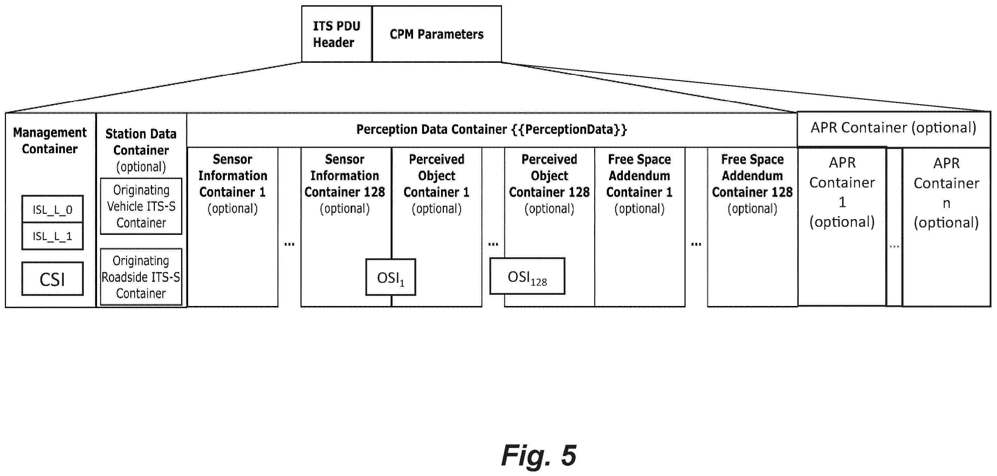

Fig. 5 depicts, in a general overview, where additions as described herein may suitably weave into the current ETSI CPM format.

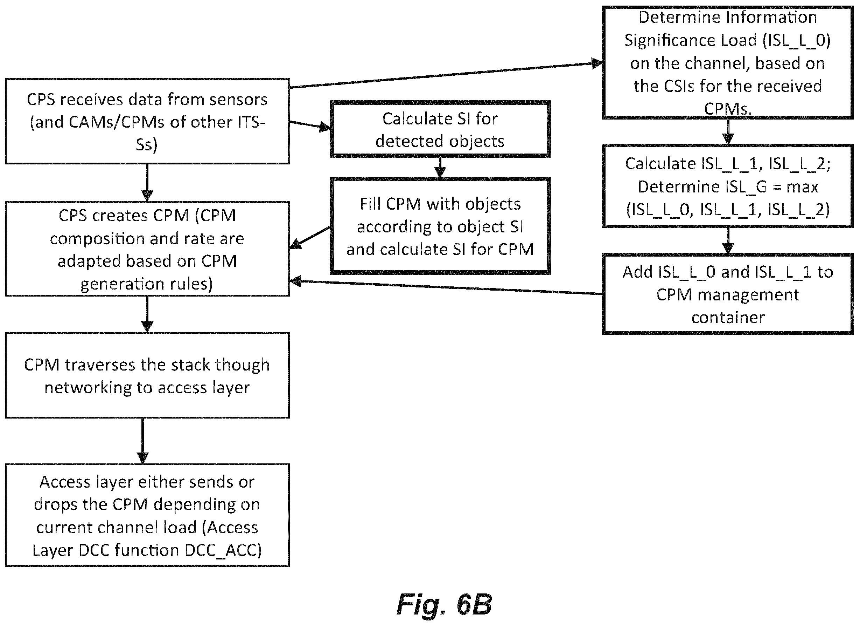

Fig. 6A and 6B illustrate the interlinking of CPM transmission and DCC executed at an ITS-S at layers of the ETSI ITS stack including the concept of a significance index introduced into CPMs, and the concept of a significance index level according to the embodiment;

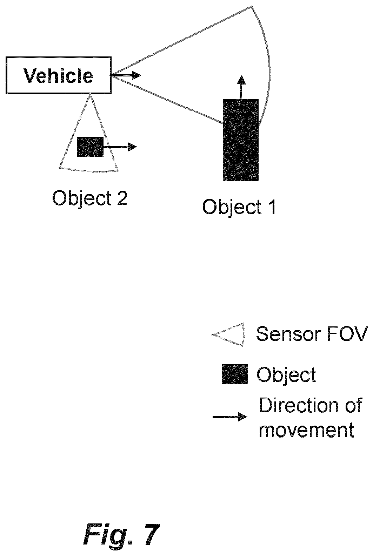

Fig. 7 illustrates an exemplary vehicle setup in the embodiment where object significance is determined based on kinematics and a single vehicle;

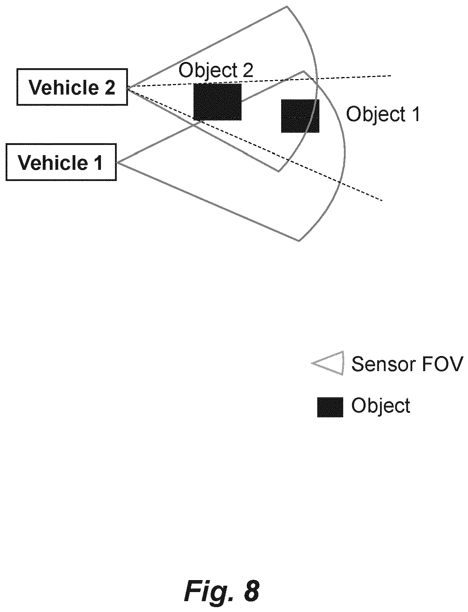

Fig. 8 illustrates another exemplary vehicle setup in the embodiment where object significance is determined based on object occlusion and two vehicles;

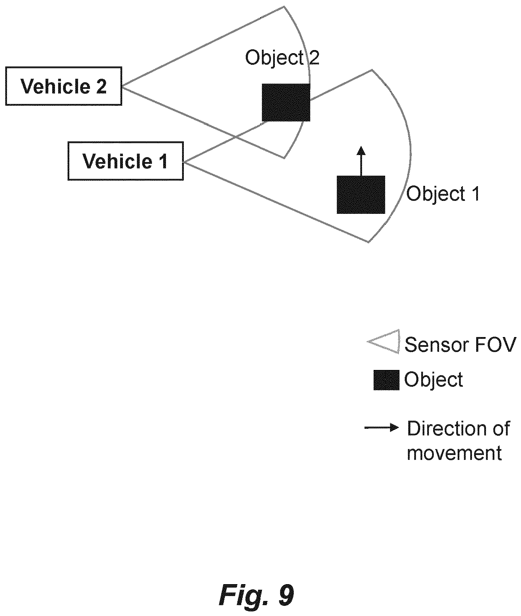

Fig. 9 illustrates another exemplary vehicle setup in the embodiment where object significance is determined based on (partially) outside FOV determination and two vehicles;

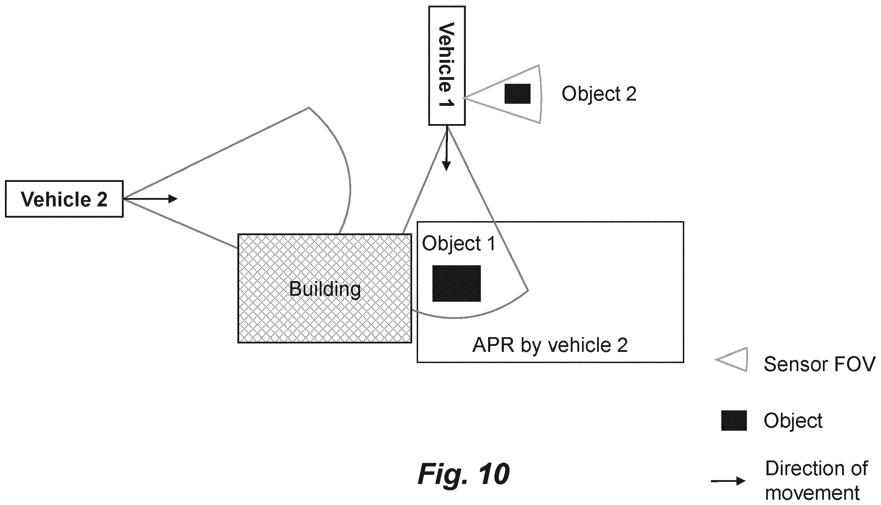

Fig. 10 illustrates another exemplary vehicle setup in the embodiment where object significance is determined for a first vehicle based on an APR area of a second vehicle; and

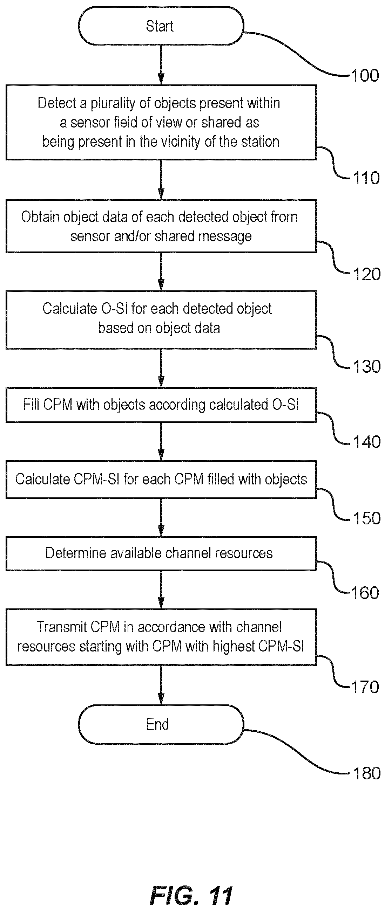

Fig. 11 shows an illustrative flow chart of a process within the concept of the significance index introduced into CPMs.

Description of the Embodiment

As mentioned at the outset, V2X is a generic term for traffic networking, electronic communication of road users with each other in the forms of vehicle-to-vehicle (V2V), vehicle-to-infrastructure (V21), vehicle-to-network (V2N) and vehicle-to-pedestrian (V2P). Wireless communication can be based on the IEEE 802.11 WLAN standard (the 802.11p extension, and e.g., its European profile ITS-G5) and is specifically termed WLAN-V2X. Alternatively, the wireless communication can be based on the 3GPP standards, specifically termed Cellular-V2X, C-V2X, or sidelink. In V2X, for example, safety and traffic messages, emergency and service data, toll billing and navigation as well as Internet and database content are exchanged. The aims of V2V include notifying drivers of critical and dangerous situations at an early stage, improving the vehicles' awareness of their surroundings, supporting the vehicles' driver assistance systems, and supporting cooperative automated mobility, thereby improving traffic safety and optimizing traffic flow.

Two alternative access layer technologies for ITS have been defined by the Institute of Electrical and Electronics Engineers (IEEE) and the Third Generation Partnership Project (3GPP), respectively.

The first approach is often referred to as Dedicated Short-Range Communication (DSRC), which supports vehicular ad-hoc connectivity using Wireless Local Area Network (WLAN) technologies standardized as IEEE 802.11p, which is the basis for the European standard ETSI ITS-G5. The second approach is Cellular-based V2X (C-V2X), a proposal by the 3GPP, based on Long-Term Evolution (LTE), also known as LTE-V2X or sidelink.

In this context, cooperative awareness within road traffic means that road users and roadside infrastructure are informed about each other's position, dynamics and attributes. Road users are all kind of users on or near the road that play a role in traffic safety and control, such as cars, trucks, motorcycles, bicycles or even pedestrians and roadside infrastructure equipment including road signs, traffic lights or barriers and gates. The awareness of each other is the basis for several road safety and traffic efficiency applications with many use cases as described in ETSI TR 102 638. It is achieved by regular broadcasting of information among the road users, from vehicle to vehicle (V2V), but also from infrastructure to any road user, V2I, I2V or X2X based on wireless networks, called V2X network and as such is part of Intelligent Transport Systems (ITS).

Cooperative safety and traffic efficiency applications require Intelligent Transportation System (ITS) sub-systems (road users, roadside units, etc.) and their ITS-Stations (ITS-Ss) to develop situational awareness that includes the presence and behavior of road users in their vicinity. Vehicle sub-systems and roadside sub-systems develop their situational awareness from their perception sensors and through communication with other surrounding ITS-Ss. The CA basic service EN 302 637-2, is an European Norm (EN) that specifies how an ITS-S can inform others about its associated sub-systems position, dynamics and attributes by sending Cooperative Awareness Messages (CAMs) according to EN 302 637-2.

The Collective Perception service (CP service or CPS) complements the CA basic service. The CPS specification defines how an ITS-S can inform others about the position, dynamics and attributes of neighboring road users, other objects, and free-space detected by local perception sensors. The CPS enables ITS sub-systems to share information about other road users and obstacles that were detected by local perception sensors such as radars, cameras and the like. In that sense, it aims at increasing awareness between ITS sub-systems by mutually contributing information about their perceived objects to the individual knowledge base of the sub-system.

The Collective Perception Message (CPM) enables sharing of information about detected objects by the disseminating ITS sub-system. The message consists of information about the disseminating ITS sub-system, its sensory capabilities and its detected objects. For this purpose, the message provides generic data elements to describe detected objects in the reference frame of the disseminating ITS sub-system. The CPM is transmitted cyclically with adaptive message generation rates to decrease the resulting channel load while focusing on reporting changes in the dynamic road environment.

In particular, draft ETSI Technical Specification ETSI TS 103 324, currently in the form of V0.0.22 draft (2021-05), focuses on the specifications of CPMs transmitted by ITS-Ss participating in the V2X network and the specification of the CPS with trigger conditions for sending CPMs.

As used herein, an object in the context of the CPS is defined as the state space representation of a physically detected object within a sensor's perception range, an object list is defined as a collection of objects temporally aligned to the same timestamp, the Collective Perception (CP) Service is defined as a facility at the ITS-S facilities layer to generate, receive and process CPMs, the Collective Perception Message (CPM) is defined as a CP service PDU (Protocol Data Unit), Collective Perception Message (CPM) data is defined as a partial or complete CPM payload, the Collective Perception (CPM) protocol is defined as the ITS facilities layer protocol for the operation of the CPM transmission and reception, an ITS station is defined as a functional entity specified by the ITS station (ITS-S) reference architecture, an Object confidence is defined as a quantification of the confidence that a detected object actually exists, i.e., has been detected previously and has continuously been detected by a sensor, a Roadside ITS station is defined as an ITS station in a roadside ITS sub-system, a Sensor Measurement is defined as the operation of a sensor based on its working principle to generate a state space representation for detected objects, a State Space Representation is defined as the mathematical description of a detected object consisting of state variables such as distance, speed, object dimensions, etc., and a Vehicle ITS station is defined as an ITS station in a vehicular ITS sub-system. CPU(s) in an ITS-S carry out the respective layer functions, namely application layer, facilities layer, and network and transport layer.

Fig. 2 depicts in more detail the Collective Perception (CP) service within the ITS-S architecture along with the logical interfaces to other layers and entities within the Facilities layer. The CPS is a Facilities layer entity in the ITS-S-S architecture. It interfaces with other entities of the Facilities layer and with ITS applications to collect relevant information for CPM generation and for forwarding received CPM content for further processing.

The entities for the collection of data to generate a CPM are the Device Data Provider (DDP), the Position and Time management (POTI) and the Local Dynamic Map (LDM). For vehicle ITS sub-systems, the DDP is connected with the in-vehicle network and provides the vehicle state information. For roadside ITS sub-systems, the DDP is connected to sensors mounted on the roadside infrastructure such as poles or gantries. The POTI entity provides the position of the ITS-S and time information. The LDM is a database in the ITS-S, which in addition to on-board sensor data is configured to be updated with received data from message such as CAM and CPM. ITS applications retrieve information from the LDM for further processing. The CPS also interfaces with the Service Announcement (SA) Service to indicate an ITS-S's ability to generate CPMs and to provide details about the communication technology/ies used.

Message dissemination-specific information related to the current channel utilization are received by interfacing with the DCC-FAC (Decentralized Congestion Control for Facility Layer) entity and the DCC-Cross entity (located in the Management plane, not shown in Fig.2). The CPS interfaces through the NF-SAP (SAP for Networking-Facility layer interface) with the networking & transport layer (N&T) for exchanging of CPMs with other ITS-Ss, the SF-SAP (SAP for Security-Facility layer interface) with the Security entity to access security services for CPM transmission and CPM reception, the MF-SAP (SAP for Management-Facility layer interface) with the Management entity and the FA-SAP (SAP for Facility-Application layer interface) with the application layer if received CPM data is provided directly to the applications. It is noted that SAP stands for Service Access Point, and that SA stands for Service Announcement.

As shown in Fig. 3, the CPS functions in a respective ITS-S encompass CPM transmission management, CPM reception management, CPM encoding and CPM decoding based on input from the DCC (including e.g. information about available channel resources), from on-board sensors (including e.g. information about sensor characteristics, FOVs, objects, free-space), CAMs and CPMs (from outside the respective ITS-S, e.g. from one or more other ITS-Ss).

Fig. 4 illustrates changes to CPS functions according to the embodiment in comparison to Fig. 3. The changes are marked in underlined bold italics in Fig. 4 and will be referred to in greater detail hereinbelow.

Fig. 5 illustrates a current state of the ETSI CPM format and identifies where the present invention might weave into this format. Current ETSI developments to specify the CPS service are described in a Technical Report describing the CPM format and the CPM generation rules as a baseline for the specification of CPS in ETSI TS 103 324.

As shown in Fig. 5, CPM messages include an ITS (Intelligent Transport Systems) PDU (Protocol Data Unit) header and 4 types of containers: A Management Container, a Station Data Container, a plurality of Sensor Information Containers (SICs) and a plurality of Perceived Object Containers (POCs).

The ITS PDU header includes data elements like a protocol version, a message ID and a Station ID. The Management Container is mandatory and provides basic information about a transmitting vehicle (such as the position thereof). Position information is used by a receiver to reference detected objects. The Station Data Container is optional and includes additional information about the transmitting vehicle (e.g., its speed, heading, or acceleration). In addition, a CPM can include up to 128 SICs to describe the capabilities of sensors embedded in the transmitting vehicle. Finally, the POCs provide information about detected objects (e.g., a distance between the detected object and the transmitting vehicle), a speed and dimensions of an object, and the time at which these measurements were done. A single CPM can include up to 128 POCs.

The CPM generation rules define when a vehicle should generate and transmit a CPM and the information to be included in the CPM. Current ETSI CPM generation rules establish that a vehicle has to check in predetermined intervals if a new CPM should be generated and transmitted. By default, the predetermined interval is set to 100ms although it can be any multiple of 100ms in the range between 100ms and 1000ms. For every predetermined interval, a vehicle should generate a new CPM if it has detected a new object, or if its absolute position has changed by more than a predetermined amount, e.g. 4m, since the last time its data was included in a CPM, or if its absolute speed has changed by more than a predetermined value, e.g. 0.5m/s, since the last time its data was included in a CPM, or if the last time the detected object was included in a CPM was a predetermined period of time, e.g. 1 (or more) seconds, ago. A vehicle includes in a new CPM all new detected objects and those objects that satisfy at least one of the previous conditions. The vehicle still generates a CPM every second even if none of the detected objects satisfy any of the previous conditions. The information about the onboard sensors is included in the CPM only once per second.

According to Fig. 5, as further shown, the concept of a significance index introduced into CPMs might weave into the pending ETSI CPM format at the Management Container (cf. a box marked CSI ("CPM-SI")), at the POCs (cf. boxes marked OSI ("O-SI") with indices 1 to 128), and by optionally adding new APR Containers 1 to n, cf. the right-hand side of Fig. 5, and an Information Significance Level (ISL) on the channel and to be shared with other ITS-Ss according to the embodiment and the present invention, calculated using the CPM Significance Index (CSI), might weave into this format at the Management Container (cf. boxes marked ISL-L-0 and ISL_L_1).

In the above context, Fig. 6A and 6B illustrate the interlinking of CPM transmission and DCC in an ITS-S at layers of the ETSI ITS stack including the concept of a significance index introduced into CPMs according to the embodiment.

According to Fig. 6A, while e.g. assuming a congested V2X channel, the CPS receives data from own sensors (and CAMs/CPMs of other ITS-Ss) and creates the CPM in accordance with predefined CPM generation rules. Fig. 6A also shows exemplary CPM generation rules with respect to a repetition rate and content, as explained in e.g. ETSI Technical Report 103 562 V2.1.1 (2019-12), cf. 4.3.4.2 "Perceived Object Container Inclusion Management", and as incorporated herein by reference. A created CPM then traverses the stack through the networking layer to the access layer, and the access layer then either sends or drops the CPM depending on a current channel load.

Fig. 6B illustrates where the concept of CSI and further the ISL interlink with the process shown in Fig. 6A. After the CPS has received data from sensors and/or CAMs/CPMs of other ITS-Ss, an SI for detected objects (object significance index, O-SI) is calculated, and the CPM is filled with object data of the objects according to the O-SI. Then the CPS creates a CPM, wherein the CPM size and rate are adapted based on channel congestion information from DCC. The CPM traverses the stack through the networking layer to the access layer, and the access layer either sends or drops the CPM depending on the current channel load (Access Layer DCC function DCC-ACC).

And, in Fig. 6B, after the CPS has received data from sensors and/or CAMs/CPMs of other ITS-Ss, an ISL (Information Significance Load, which may be also termed an Information Significance Level) ISL_L_0 on the channel is determined based on the CSIs for the received CPMs, first and second level hops ISL_L_1, ISL_L_2 are determined and a global ISL (ISL_G) is determined as ISL_G = max (ISL_L_0, ISL_L_1, ISL_L_2), and ISL_L_= and ISL_L_1 are added to the CPM management container before the CPM traverses the stack and the access layer either sends or drops the CPM, as mentioned above.

The present invention is based on and has a plurality of aspects, an overview of which is given in the following: Within the context of CPS functions, which according to Fig. 3 encompass CPM transmission management, CPM reception management, CPM encoding and CPM decoding, the existing CPS functions are expanded and/or adapted by incorporating a significance index (SI).

Concomitantly with the incorporation of the SI, which as such serves to avoid loss of significant information, a significance of a CPM is based on the significance index (SI) of the object information within for the CPS to adaptively include (depending on the current V2X channel load) only the most significant objects (e.g., from a safety point of view) within a CPM.

Here, it is conceivable that other ITS-Ss than an (own) host ITS-S can influence the SI calculation of the host ITS-S by sending an Area Perception Request (APR), which is a request for an area for which they want to receive object information, and further other applications within the C-ITS system, such as on-demand CPM transmission, are conceivable as well.

Preferably, the SI is calculated by the CPS based on data obtained at a host ITS-S about a detected object, wherein such data include at least one of kinematics, novelty, time elapsed since last update, classification, confidence of detection, and/or based on the need of other ITS-Ss.

As used herein, kinematics includes at least one of position, speed, and acceleration, without being limited thereto, i.e., parameters that are suitable to indicate the likelihood for an object to be a safety hazard for one or more road user(s). For example, in a case where one vehicle is moving slow and another vehicle is moving fast and a likelihood of the faster vehicle being a safety hazard is determined, then the higher the likelihood of being a safety hazard is, the higher is the significance thereof.

As used herein, novelty means an object not having been detected previously. A novel object increases the significance. Time elapsed since last update relates to an object having not been reported for a predetermined time. The longer the time elapsed is, the higher is the significance thereof. Classification generally refers to object types and takes into account higher 'value' objects such as vulnerable road users (VRUs). Accordingly, the significance is determined to be higher for classes including such higher value objects. Likewise for a confidence of detection (value), the higher the confidence (value) is, the higher is the significance thereof.

As for the need of other ITS-Ss, an object with kinematics (e.g., position, speed, acceleration), especially in relation to one or more road user(s) (vicinity, collision path, and so on), is preferably taken into account when determining the object significance. Fig. 7 shows an illustrative example where, when a vehicle ITS-S detects a first object (Object 1) and a second object (Object 2), the first object is considered more significant than the second object due a potential collision path with the first object but not with the second object.

Also, with respect to the need of other ITS-Ss, objects that are difficult or impossible to be detected by a neighboring ITS-S, e.g., occluded objects that are partially or fully hidden based on the positions of the other known objects and the FOVs of the sensors of the known neighboring vehicles are also preferably taken into account when determining the object significance. Fig. 8 shows an illustrative example where in a traffic environment including a first and a second vehicle and a first and a second object, the first object (Object 1) is considered more significant than the second object (Object 2) by the first vehicle (Vehicle 1) because for the FOV of the sensor of the second vehicle, the first object is occluded by the second object.

Objects that are difficult or impossible to detect further include objects on the boundary or completely outside of the FOVs of the sensors of the neighboring ITS-S and objects that have been detected by other ITS-Ss with less confidence than that of the host ITS-S, without being limited thereto. Fig. 9 shows an illustrative example where in a traffic environment including a first and a second vehicle and a first and a second object, the first object (Object 1) is considered more significant than the second object (Object 2) by the first vehicle (Vehicle 1) because the first object is completely outside the FOV of the second vehicle (Vehicle 2).

Also, with respect to the need of other ITS-Ss, objects whose detected location differs between different ITS-S, including a vehicular ITS-S type object whose location in its CAM differs from that detected by the sensors of another ITS-S, are preferably taken into account when determining the object significance.

With further respect to the need of other ITS-Ss, a number of area perception requests (APRs) by other ITS-Ss of an area in which an object detected by a host ITS-S is located, are preferably taken into account when determining the object significance. Here, as non-limiting examples, the request for this area may be explicitly sent out by a neighboring ITS-S, and/or the request may be part of an optional container within the CPM where the sending ITS-S can indicate the area for which it would like to receive object information. Fig. 10 shows an illustrative example where in a traffic environment including a first and a second vehicle, a first and a second object and e.g., a building, the first object (Object 1) is deemed more significant than the second object (Object 2) by the first vehicle (Vehicle 1) because the first object falls in an area perception request (APR) area of the second vehicle (Vehicle 2).

Fig. 11 shows an illustrative flow chart of an exemplary process for calculating and transmitting the significance index (SI) at the CPS.

In a step 110 in which a plurality of objects present within a field of view (FOV) of at least one sensor provided at a respective station or included in a shared message received from another station as being present in the vicinity of the station are detected.

Then, in a step 120, object data (kinematics and trajectory, if applicable) of each detected object from said at least one sensor, and/or said shared message, including objects detected via CAMs, is obtained.

It is noted that the shared message includes CPMs obtained from other ITS-Ss, including the FOVs and/or APRs from these stations. It is further noted that in case of limited processing capacity and where CPMs obtained from other ITS-Ss include a CSI, the arrangement is preferably such that CPMs with a high CSI (or CPM-SI) are processed first.

In a next step 130, an O-SI for each detected object is calculated based on the object data. Here, the calculation is performed based on the various factors described above. As a non-limiting example, a simple calculation model includes adding the values for different factors and normalizing the result to 1 to 10 in order to obtain an SI value.

Then, in step 140, a CPM is filled with object data of the objects in accordance with their calculated O-SI. As a non-limiting example, a simple filling model starts the filling with a most significant object and continues with lesser significant objects, respectively, as CPM construction rules about the CPM size permit. In other words, this step calculates and populates the CSI for each CPM. A non-limiting simple model example includes taking the average of O-SIs of all the objects within. It is noted that the O-SI and the CSI may both be integer type parameters with values from e.g., 1 to 10. For clarity, CSI is an abbreviated form of and may be synonymously termed CPM-SI.

It is noted that calculating the O-SI and filling a CPM with object data of the objects in accordance with their O-SI, as illustrated in steps 130 and 140, is an exemplary way to calculate the CSI. Other ways of calculating the CSI are conceivable and the way disclosed as a modification herein imposes no limitation on how the priority of CPMs is determined.

In a step 150, a CSI for each CPM filled with object data of the objects is then calculated.

A following step 160 determines available channel resources of the wireless communication channel.

Finally, in a step 170, CPMs are transmitted in accordance with the available channel resources starting with a CPM with the highest CSI. Preferably, in case of a congested channel, the CPMs are sent out starting with the highest CSI until the available channel resources (as decided upon by the DCC entity) are exhausted.

In this process, thanks to CSI, CPMs are transmitted in accordance with the available channel resources starting with a CPM with the highest CSI. Accordingly, the CSI reduces the possibility that important CPMs are discarded.

According to an embodiment of the present invention, the above described CPM Significance Index (CSI) concept of CPM is used to calculate an "Information Significance Level (ISL)" on the channel and share it with other ITS-Ss.

In more detail, a local ISL ISL_L_0 on the channel is calculated. ISL_L_0 is an index based on the CSIs of the received CPMs within one time interval. For a non-limiting example, the time interval may have a default value of 1 second, and a simplest model for calculating ISL_L_0 may reside in averaging the CSI values of all received CPMs within said one predetermined time interval.

Preferably, the calculated ISL value(s) are included within the management container of CPM in 2 Bytes. Here, an exemplary model for including the calculated ISL value(s) includes sending the locally calculated ISL, or "level 0 hop", ISL_L_0 in said one time interval (default length 1 second, value 1-16, size 1 byte), calculating the maximum of received ISL_L_0s in one time interval (default length 1 second) and sending this "level 1 hop" ISL_L_1 (value 1-16, size 1 byte), and calculating the maximum of received ISL_L_1s in one time interval and not sending this "level 2 hop" ISL_L_2. At this point, a global ISL (ISL_G) is then calculated as ISL_G = max (ISL_L_0, ISL_L_1, ISL_L_2).

As used herein, "zero-hop" includes all ITS-Ss within a direction or direct radio communication range of an ITS-S. Likewise, "one-hop" then includes all ITS-Ss in the radio communication range of the zero-hop ITS-Ss in addition, and "two-hop" then includes all ITS-Ss in the radio communication range of the zero-hop ITS-Ss and the one-hop ITS-Ss in addition.

As described above, the present invention realizes a multi-hop, or at least 2-hop, ISL determination based on sending ISLs out to and receiving ISLs from neighboring ITS-Ss, wherein, from the viewpoint of the ego ITS-S, the calculated local ISL is disseminated to neighboring ITS-S as the ISL_L_0 hop, the ISL_L_1 hop is the maximum ISL_R_0 hop value received from a neighboring ITS-S in a given time interval, and the ISL_L_2 hop is the maximum ISL_R_1 hop value received from a neighboring ITS-S in a given time interval.

R and L hop values as used herein stem from the multi-hop transmission and reception environment between IST-Ss the ISL is determined in. R and L specifies the whereto and wherefrom from the viewpoint of a given ITS-S.

For further explanation, in the multi-hop transmission and reception environment between IST-Ss, for example, L_0 hop is a value calculated locally (at the ego ITS-S) which is disseminated from the ego ITS-S to a neighboring ITS-S as R_0 hop, i.e. L_0 hop becomes R_0 hop when disseminated from the ego ITS-S to a neighboring ITS-S and becomes L_1 hop at the receiving neighboring ITS-S. Likewise, other ITS-S disseminate their L_0 hops as R_0 hops which become L_1 hops at the ego station. If an L_1 hop, e.g. the maximum of received L_0s from other ITS-Ss, is disseminated as R_1 hop from the ego ITS-S to a neighboring ITS-S, it becomes L_2 hop at the receiving neighboring ITS-S, and so on.

In the above context, the multi-hop transmission and reception approach is related to the calculation of the Global Channel Busy Ration CBR_G as described in ETSI Technical Specification ETSI TS 102 636-4-2 V1.2.1 (2020-04), chapter 5.3 "Calculation of the global channel busy ratio CBR_G", which is incorporated herein by reference for a fuller understanding of the ISL calculations according to the present invention:

To calculate *CBR_G,* the following steps shall be executed at every *T_Trig*:

The value of *T_Trig* equals the GeoNetworking protocol constant itsGNCBRGTriggerInterval. Within the trigger interval *T_Trig,* all ITS-S shall start with a random time offset.

The values of *CBR_L_1_Hop(0)* and *CBR_L_2_Hop(0)* shall be initialized to 0.

NOTE: The time offset prevents that all ITS-Ss to trigger the calculation of *CBR_G* at the same time.

**Step 1:**

Calculate the average of $CBR\_R\_0\_Hop(i)$, i.e. $\qquad$ (1)

$$\overline{CBR\_R\_0\_Hop} = \frac{1}{n_0}\sum_i CBR\_R\_0\_Hop(i)\,\forall i \text{ where } CBR\_R\_0\_Hop(i) \text{ is not older than } T\_cbr$$

where $n_0$ is the total number of the $CBR\_R\_0\_Hop$ entries that are not outdated (older than $T\_Cbr$)

**Step 2:**

$$\text{If } \overline{CBR\_R\_0\_Hop} > CBR\_target \qquad (2)$$

$$CBR\_L\_1\_Hop := \max_i \{ CBR\_R\_0\_Hop(i) \} \text{ during the last CBR lifetime } T\_Cbr$$

**Else**
Set $CBR\_L\_1\_1\_Hop$ to the second largest $CBR\_R\_0\_Hop(i)$ during the last CBR lifetime $T\_Chr$

**Step 3:**

Calculate the average of $CBR\_R\_1\_Hop(i)$, i.e. $\qquad$ (3)

$$\overline{CBR\_R\_1\_Hop} = \frac{1}{n_1}\sum_i CBR\_R\_1\_Hop(i)\,\forall i \text{ where } CBR\_R\_1\_Hop(i) \text{ is not older than } T\_cbr$$

where no is the total number of the $CBR\_R\_1\_Hop$ entries that are not outdated (older than $T\_Chr$)

**Step 4:**

$$\text{If } \overline{CBR\_R\_1\_Hop} > CBR\_target \qquad (4)$$

$$CBR\_L\_1\_Hop := \max_i \{ CBR\_R\_0\_Hop(i) \} \text{ during the last CBR lifetime } T\_Cbr$$

**Else**
Set $CBR\_L\_1\_Hop$ to the second largest $CBR\_R\_0\_Hop(i)$ during the last CBR lifetime $T\_Cbr$

**Step 5:**

Calculate the global channel busy ratio CBR_G $\qquad$ (5)

$$CBR\_G(n)\ CBR\_G(n) = \max(CBR\_L\_0\_Hop(n-1), CBR\_L\_1\_Hop(n), CBR\_L\_2\_Hop(n))$$

where n corresponds to the nth trigger interval, $T\_trig$

The $CBR\_G$ value is passed from the DCC_NET entity to the DCC_CROSS_Net entity (see clause 5.4) and input to the DCC algorithm running at the access layer as specified in ETSI TS 102 687 [4].

The technical effect of ISL resides, by providing an improved assessment of the significance of the information within an individual CPM for all the CPM information available on the channel at one time, in a further reduction and/or limitation of the CPM size and a reduction of the V2X wireless channel load. Since the channel budget of an ITS-S is limited by the channel capacity determined by the DCC depending on the level of congestion, the ITS-S, being capable of determining how significant its own information is compared to that from other stations, can optimize CPM prioritization and mitigate redundant information, reduce the CPM size, free up capacity with respect to particularly a (potentially or actually) congested V2X wireless channel and better prevent packets with significant information about highly relevant objects from being dropped.

The present invention has been described using one preferred embodiment thereof. It is, however, understood that the present invention is not limited to the specifically described embodiment and can include and cover additional aspects, configurations and modifications without departing from the scope of the subject matter described and claimed. Such additional aspects, configurations and modifications may, for example, include a method, a computing program, and equipment for calculating the ISL for the communication channel based on the significance of the transmitted V2X messages, the ISL may be configured to be a local "zero-hop" value, the hop radius may be configured to be a single-hop radius or a two-hop radius, and a global value may be a maximum of the above three.

Such additional aspects, configurations and modifications may, for example, further include a method, a computing program, and equipment for encoding and decoding, transmitting and receiving, as part of V2X message, the ISL for the communication channel based on the significance of the transmitted V2X messages using a local "zero-hop" value and a single-hop radius.

Still further aspects, configurations and modifications may, for example, relate to a method, a computing program, and an equipment for composing, transmitting, receiving, and decoding an ITS message or part of an ITS message containing information about the geographical area which is only partially or not at all detected by the sensors of the sender ITS-S, and/or a criticality of the above area for the sender ITS-S, and/or a method, a computing program, and an equipment for deciding to transmit a CPM based on its SI and the available channel resources.

In general, embodiments of the invention may be implemented in hardware or special purpose circuits, software, logic or any combination thereof. For example, some aspects may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that blocks, apparatus, systems, techniques or methods described herein may be implemented in, as non-limiting examples, hardware, software, firmware, special purpose circuits or logic, general purpose hardware or controller or other computing devices, or some combination thereof.

Embodiments of this invention may be implemented by computer software executable by a data processor of a system entity, such as in the processor entity, or by hardware, or by a combination of software and hardware. Further in this regard it should be noted that any blocks of logic flow shown in the figures may represent program steps, or interconnected logic circuits, blocks and functions, or a combination of program steps and logic circuits, blocks and functions. The software may be stored on physical media such as memory chips, or memory blocks implemented within the processor, magnetic media such as hard disk or floppy disks, and optical media such as for example DVD and the data variants thereof, CD.

Memory may be of any type suitable to the local technical environment and may be implemented using any suitable data storage technology, such as semiconductor-based memory devices, magnetic memory devices and systems, optical memory devices and systems, fixed memory and removable memory. Data processors may be of any type suitable to the local technical environment, and may include one or more of general purpose computers, special purpose computers, microprocessors, digital signal processors (DSPs), application specific integrated circuits (ASIC), gate level circuits and processors based on multi-core processor architecture, as non-limiting examples.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

Electronic Design Automation (EDA) programs and tools automatically route conductors and locate components on a semiconductor chip using well established rules of design as well as libraries of pre-stored design modules. Once the design for a semiconductor circuit has been completed, the resultant design, in a standardized electronic format may be transmitted to a semiconductor fabrication facility or "fab" for fabrication.

The description so far has provided by way of an exemplary and non-limiting example a full and informative description of the exemplary embodiment of this invention. However, various modifications and adaptations may become apparent to those skilled in the relevant art in view of the foregoing description, when read in conjunction with the accompanying drawings and the appended claims. It is understood that all such and similar modifications of the teachings of this invention will still fall within the scope of this invention as defined in the appended claims.

With the present invention as described above, in a method for calculating a collective perception message (CPM) information significance level (ISL) in a cooperative intelligent transport system (C-ITS) using a wireless communication channel for transmitting, receiving, processing and/or discarding a plurality of collective perception messages (CPMs) containing information about on-board sensors and/or objects detected by said on-board sensors within a traffic environment, a collective perception message significance index (CSI) value is calculated for each CPM filled with object data of objects detected within a field of view (FOV) of at least one sensor provided at an intelligent transport system station (ITS-S) or included in a shared message received from another ITS-S as being present in the communication range of the ITS-S, the information significance level (ISL) on the channel is calculated based on the CSI values for all received CPMs, and the calculated ISL is shared with other ITS-Ss.

**Claims**

**1.** A method for calculating a collective perception message, CPM, information significance level, ISL, in a cooperative intelligent transport system, C-ITS, using a wireless communication channel for transmitting, receiving, processing and/or discarding a plurality of collective perception messages, CPMs, containing information about on-board sensors and/or objects detected by said on-board sensors within a traffic environment,
said method comprising the steps of:

calculating a collective perception message significance index, CSI, value for each CPM filled with object data of the objects detected within a field of view, FOV, of at least one sensor provided at an intelligent transport system station, ITS-S,
or included in a shared message received from another ITS-S as being present in the communication range of the ITS-S;
calculating the information significance level, ISL, on the channel based on the CSI values for all received CPMs; and
sharing the calculated ISL with other ITS-Ss, wherein

the significance index, SI, is calculated by a collective perception service, CPS, based on data obtained at a host intelligent transport system station, ITS-S, about a detected object, wherein such data include at least one of kinematics, novelty, time elapsed since last update, classification, confidence of detection, and/or based on the need of other ITS-Ss, and
the information significance level, ISL, comprises determining a local information significance level, ISL_L_0, on the channel from the message significance index, CSI, values for all received CPMs as a local zero-hop value by averaging the CSI values of all received CPMs within a predetermined time interval.

2. A method according to claim 1, wherein the step of calculating the information significance level, ISL, comprises determining a local information significance level, ISL_L_0, on the channel from the CSI values for all received CPMs as a local zero-hop value by averaging the CSI values of all received CPMs within a predetermined time interval.

3. A method according to claim 2, wherein first and second hop information significance levels, ISL_L_1, ISL_L_2, are calculated, wherein the first hop information significance level, ISL_L_1, is the highest received value calculated in a single-hop radius within the predetermined time interval from the local information significance levels, ISL_L_0, and the second hop information significance level, ISL_L_2, is the highest received value calculated in a two-hop radius within the predetermined time interval from the first hop information significance level, ISL_L_1.

4. A method according to claim 3, wherein a global information significance level, ISL-G, is determined as ISL_G = max (ISL_L_0, ISL_L_1, ISL_L_2).

5. A method according to claim 2, wherein the local information significance level, ISL_L_0, and a first hop information significance level, ISL_L_1, are included as ISL value(s) in a CPM management container, and a second hop information significance level, ISL_L_2, is not included in the CPM management container.

6. A method according to one of claims 2 to 5, wherein the predetermined time interval has a default value of 1 second, the local information significance level, ISL_L_0, and the first hop information significance level, ISL_L_1, each have a value of 1 to 16 and a size of 1 byte.

7. A method according to one of the preceding claims, wherein the ITS-S is a vehicle or a roadside unit, RSU.

8. A method according to one of the preceding claims, wherein the wireless communication is direct vehicle-to-x, V2X, communication.

9. A cooperative intelligent transport system for calculating a collective perception message, CPM, information significance level, ISL, in a cooperative intelligent transport system, C-ITS, using a wireless communication channel for transmitting, receiving, processing and/or discarding a plurality of collective perception messages, CPMs, containing information about on-board sensors and/or objects detected by said on-board sensors within a traffic environment,
said cooperative intelligent transport system comprising:

a calculating unit arranged to calculate a collective perception message significance index, CSI, value for each CPM filled with object data of the objects detected within a field of view, FOV, of at least one sensor provided at an intelligent transport system station, ITS-S, or

included in a shared message received from another ITS-S as being present in the communication range of the ITS-S; and the information significance level, ISL, on the channel based on the CSI values for all received CPMs; and

a sharing unit arranged to share the calculated ISL with other ITS-Ss, wherein the significance index, SI, is calculated by a collective perception service, CPS, based on data obtained at a host intelligent transport system station, ITS-S, about a detected object, wherein such data include at least one of kinematics, novelty, time elapsed since last update, classification, confidence of detection, and/or based on the need of other ITS-Ss, and the information significance level, ISL, comprises determining a local information significance level, ISL_L_0, on the channel from the message significance index, CSI, values for all received CPMs as a local zero-hop value by averaging the CSI values of all received CPMs within a predetermined time interval.

10. A computer-implemented system for calculating a collective perception message, CPM, information significance level, ISL, in a cooperative intelligent transport system, C-ITS, using a wireless communication channel for transmitting, receiving, processing and/or discarding a plurality of collective perception messages, CPMs, containing information about on-board sensors and/or objects detected by said on-board sensors within a traffic environment, said computer-implemented system comprising a memory for storing instructions which, when carried out by a processor, cause the processor to perform the steps of

calculating a collective perception message significance index, CSI, value for each CPM filled with object data of the objects detected within a field of view, FOV, of at least one sensor provided at an intelligent transport system station, ITS-S, or included in a shared message received from another ITS-S as being present in the communication range of the ITS-S;
calculating the information significance level, ISL, on the channel based on the CSI values for all received CPMs; and
sharing the calculated ISL with other ITS-Ss, wherein

the significance index, SI, is calculated by a collective perception service, CPS, based on data obtained at a host intelligent transport system station, ITS-S, about a detected object, wherein such data include at least one of kinematics, novelty, time elapsed since last update, classification, confidence of detection, and/or based on the need of other ITS-Ss, and
the information significance level, ISL, comprises determining a local information significance level, ISL_L_0, on the channel from the message significance index, CSI, values for all received CPMs as a local zero-hop value by averaging the CSI values of all received CPMs within a predetermined time interval.

**Patentansprüche**

1. Verfahren zum Berechnen einer kollektive Wahrnehmungsnachricht, CPM, Informationssignifikanzstufe, ISL, in einem kooperativen intelligenten Transportsystem, C-ITS, unter Verwendung eines drahtlosen Kommunikationskanals zum Senden, Empfangen, Verarbeiten und/oder Verwerfen einer Vielzahl von kollektiven Wahrnehmungsnachrichten, CPM, die Informationen über fahrzeugseitige Sensoren und/oder von den fahrzeugseitigen Sensoren detektierte Objekte innerhalb einer Verkehrsumgebung enthalten, wobei das Verfahren die Schritte umfasst:

Berechnen eines Werts eines kollektive Wahrnehmungsnachricht-Signifikanzindex, CSI, für jede CPM, die mit Objektdaten der Objekte gefüllt ist, die innerhalb eines Sichtfelds, FOV, zumindest eines Sensors, der an einer Station, ITS-S, des intelligenten Transportsystems bereitgestellt ist, detektiert wurden, oder die in einer von einer anderen ITS-S, die in dem Kommunikationsbereich der ITS-S vorhanden ist, empfangenen gemeinsamen Nachricht enthalten sind;
Berechnen der Informationssignifikanzstufe, ISL, auf dem Kanal basierend auf den CSI-Werten für alle empfangenen CPM; und
Teilen der berechneten ISL mit anderen ITS-S, wobei
der Signifikanzindex, SI, von einem kollektiven Wahrnehmungsdienst, CPS, basierend auf Daten berechnet wird, die an einer Host-Station, ITS-S, des intelligenten Transportsystems über ein detektiertes Objekt erhalten wurden, wobei solche Daten zumindest eines von Kinematik, Neuheit, seit der letzten Aktualisierung verstrichener Zeit, Klassifizierung, Detektierungssicherheit beinhalten, und/oder auf dem Bedarf anderer ITS-S basieren, und
die Informationssignifikanzstufe, ISL, ein Bestimmen einer lokalen Informationssignifikanzstufe, ISL_L_0, auf dem Kanal aus den Werten des Nachrichtensignifikanzindex, CSI, für alle empfangenen CPM als einen lokalen Zero-Hop-Wert durch Mitteln der CSI-Werte aller empfangener CPM innerhalb eines vorbestimmten Zeitintervalls umfasst.

2. Verfahren nach Anspruch 1, wobei der Schritt des Berechnens der Informationssignifikanzstufe, ISL, ein Bestimmen einer lokalen Informationssignifikanzstufe, ISL_L_0, auf dem Kanal aus den CSI-Werten für alle empfangenen CPM als einen lokalen Zero-Hop-Wert durch Mitteln der CSI-Werte aller empfangenen CPM innerhalb eines vorbestimmten Zeitintervalls umfasst.

3. Verfahren nach Anspruch 2, wobei erste und zweite Hop-Informationssignifikanzstufen, ISL_L_ 1, ISL_L_2, berechnet werden, wobei die erste Hop-Informationssignifikanzstufe, ISL_L_ 1, der höchste empfangene Wert ist, der in einem Ein-Hop-Radius innerhalb des vorbestimmten Zeitintervalls aus den lokalen Informationssignifikanzstufen, ISL_L_0, berechnet wird, und die zweite Hop-Informationssignifikanzstufe, ISL_L_2, der höchste empfangene Wert ist, der in einem Zwei-Hop-Radius innerhalb des vorbestimmten Zeitintervalls aus der ersten Hop-Informationssignifikanzstufe, ISL_L_ 1, berechnet wird.

4. Verfahren nach Anspruch 3, wobei eine globale Informationssignifikanzstufe, ISL-G, bestimmt wird als ISL_G = max (ISL_L_0, ISL_L_ 1, ISL_L_2).

5. Verfahren nach Anspruch 2, wobei die lokale Informationssignifikanzstufe, ISL_L_0, und eine erste Hop-Informationssignifikanzstufe, ISL_L_1, als ISL-Wert(e) in einem CPM-Management-Container enthalten sind und eine zweite Hop-Informationssignifikanzstufe, ISL_L_2, nicht in dem CPM-Management-Container enthalten ist.

6. Verfahren nach einem der Ansprüche 2 bis 5, wobei das vorbestimmte Zeitintervall einen Standardwert von 1 Sekunde hat, und die lokale Informationssignifikanzstufe, ISL_L_0, und die erste Hop-Informationssignifikanzstufe, ISL_L_1, jeweils einen Wert von 1 bis 16 und eine Größe von 1 Byte haben.

7. Verfahren nach einem der vorangehenden Ansprüche, wobei die ITS-S ein Fahrzeug oder eine straßenseitige Einheit, RSU, ist.

8. Verfahren nach einem der vorhergehenden Ansprüche, wobei die drahtlose Kommunikation eine direkte Fahrzeug-zu-X, V2X, Kommunikation, ist.

9. Kooperatives intelligentes Transportsystem zum Berechnen einer kollektive Wahrnehmungsnachricht, CPM, Informationssignifikanzstufe, ISL, in einem kooperativen intelligenten Transportsystem, C-ITS, unter Verwendung eines drahtlosen Kommunikationskanals zum Senden, Empfangen, Verarbeiten und/oder Verwerfen einer Vielzahl von kollektiven Wahrnehmungsnachrichten, CPM, die Informationen über fahrzeugseitige Sensoren und/oder von den fahrzeugseitigen Sensoren detektierte Objekte innerhalb einer Verkehrsumgebung enthalten,
wobei das kooperative intelligente Verkehrssystem umfasst:

eine Recheneinheit, die angeordnet ist zum Berechnen

eines Werts eines kollektive Wahrnehmungsnachricht-Signifikanzindex, CSI, für jede CPM, die mit Objektdaten der Objekte gefüllt ist, die innerhalb eines Sichtfelds, FOV, zumindest eines Sensors, der an einer Station, ITS-S, des intelligenten Transportsystems bereitgestellt ist, detektiert wurden, oder die in einer von einer anderen ITS-S, die in dem Kommunikationsbereich der ITS-S vorhanden ist, empfangenen gemeinsamen Nachricht enthalten sind; und
der Informationssignifikanzstufe, ISL, auf dem Kanal basierend auf den CSI-Werten für alle empfangenen CPM; und

eine Teilungseinheit, die angeordnet ist zum Teilen der berechneten ISL mit anderen ITS-S, wobei
der Signifikanzindex, SI, von einem kollektiven Wahrnehmungsdienst, CPS, basierend auf Daten berechnet wird, die an einer Host-Station, ITS-S, des intelligenten Transportsystems über ein detektiertes Objekt erhalten wurden, wobei solche Daten zumindest eines von Kinematik, Neuheit, seit der letzten Aktualisierung verstrichener Zeit, Klassifizierung, Detektierungssicherheit beinhalten, und/oder auf dem Bedarf anderer ITS-S basieren, und
die Informationssignifikanzstufe, ISL, ein Bestimmen einer lokalen Informationssignifikanzstufe, ISL_L_0, auf dem Kanal aus den Werten des Nachrichtensignifikanzindex, CSI, für alle empfangenen CPM als einen lokalen Zero-Hop-Wert durch Mitteln der CSI-Werte aller empfangenen CPM innerhalb eines vorbestimmten Zeitintervalls umfasst.

10. Computerimplementiertes System zum Berechnen einer kollektive Wahrnehmungsnachricht, CPM, Informationssignifikanzstufe, ISL, in einem kooperativen intelligenten Transportsystem, C-ITS, unter Verwendung eines drahtlosen Kommunikationskanals zum Senden, Empfangen, Verarbeiten und/oder Verwerfen einer Vielzahl von kollektiven Wahrnehmungsnachrichten, CPM, die Informationen über fahrzeugseitige Sensoren und/oder von den fahrzeugseitigen Sensoren detektierte Objekte innerhalb einer Verkehrsumgebung enthalten,
wobei das computerimplementierte System einen Speicher zum Speichern von Anweisungen umfasst, die, wenn sie von einem Prozessor ausgeführt werden, den Prozessor veranlassen, die Schritte auszuführen des:

Berechnens eines Werts eines kollektive Wahrnehmungsnachricht-Signifikanzindex, CSI, für jede CPM, die mit Objektdaten der Objekte gefüllt ist, die innerhalb eines Sichtfelds, FOV, zumindest eines Sensors, der an einer Station, ITS-S, des intelligenten Transportsystems detektiert wurden, oder die in einer von einer anderen ITS-S, die in dem Kommunikationsbereich der ITS-S vorhanden ist, empfangenen gemeinsamen Nachricht enthalten sind;
Berechnens der Informationssignifikanzstufe, ISL, auf dem Kanal basierend auf den CSI-Werten für alle empfangenen CPM; und
Teilen der berechneten ISL mit anderen ITS-S, wobei
der Signifikanzindex, SI, von einem kollektiven Wahrnehmungsdienst, CPS, basierend auf Daten berechnet wird, die an einer Host-Station, ITS-S, des intelligenten Transportsystems über ein detektiertes Objekt erhalten wurden, wobei solche Daten zumindest eines von Kinematik, Neuheit, seit der letzten Aktualisierung verstrichener Zeit, Klassifizierung, Detektierungssicherheit beinhalten, und/oder auf dem Bedarf anderer ITS-S basieren, und
die Informationssignifikanzstufe, ISL, ein Bestimmen einer lokalen Informationssignifikanzstufe, ISL_L_0, auf dem Kanal aus den Werten des Nachrichtensignifikanzindex, CSI, für alle empfangenen CPM als einen lokalen Zero-Hop-Wert durch Mitteln der CSI-Werte aller empfangenen CPM innerhalb eines vorbestimmten Zeitintervalls umfasst.

## Revendications

1. Procédé de calcul d'un niveau d'importance d'informations, ISL, de message de perception collective, CPM, dans un système de transport intelligent coopératif, C-ITS, utilisant un canal de communication sans fil pour transmettre, recevoir, traiter et/ou rejeter une pluralité de messages de perception collective, CPM, contenant des informations sur des capteurs embarqués et/ou des objets détectés par lesdits capteurs embarqués dans un environnement de trafic, ledit procédé comprenant les étapes de :

calcul d'une valeur d'indice d'importance de message de perception collective, CSI, pour chaque CPM rempli de données d'objet des objets détectés dans un champ de vision, FOV, d'au moins un capteur disposé au niveau d'une station de système de transport intelligent, ITS-S, ou inclus dans un message partagé reçu d'une autre ITS-S comme étant présent dans la portée de communication de l'ITS-S ;
calcul du niveau d'importance d'informations, ISL, sur le canal sur la base des valeurs CSI pour tous les CPM reçus ; et
partage de l'ISL calculé avec d'autres ITS-S, dans lequel

l'indice d'importance, SI, est calculé par un service de perception collective, CPS, sur la base de données obtenues au niveau d'une station de système de transport intelligent, ITS-S, hôte concernant un objet détecté, dans lequel de telles données incluent au moins un élément parmi une cinématique, une nouveauté, un temps écoulé depuis la dernière mise à jour, une classification, une confiance de détection, et/ou en fonction des besoins des autres ITS-S, et
le niveau d'importance d'informations, ISL, comprend la détermination d'un niveau d'importance d'informations local, ISL_L_0, sur le canal à partir des valeurs d'indice d'importance de message, CSI, pour tous les CPM reçus sous la forme d'une valeur de saut zéro locale par calcul de la moyenne des valeurs CSI de tous les CPM reçus dans un intervalle de temps prédéterminé.

2. Procédé selon la revendication 1, dans lequel l'étape de calcul du niveau d'importance d'informations, ISL, comprend la détermination d'un niveau d'importance d'informations local, ISL_L_0, sur le canal à partir des valeurs CSI de tous les CPM reçus comme une valeur de saut zéro locale par calcul de la moyenne des valeurs CSI de tous les CPM reçus dans un intervalle de temps prédéterminé.

3. Procédé selon la revendication 2, dans lequel des premier et second niveaux d'importance d'informations de saut, ISL_L_1, ISL_L_2, sont calculés, dans lequel le premier niveau d'importance d'informations de saut, ISL_L_1, est la valeur reçue la plus élevée calculée dans un rayon de saut unique dans l'intervalle de temps prédéterminé à partir des niveaux d'importance d'informations locaux, ISL_L_0, et le second niveau d'importance d'informations de saut, ISL_L_2, est la valeur reçue la plus élevée calculée dans un rayon de deux sauts dans l'intervalle de temps prédéterminé à partir du premier niveau d'importance d'informations de saut, ISL_L_1.

4. Procédé selon la revendication 3, dans lequel un niveau d'importance d'informations global, ISL-G, est déterminé comme ISL_G = max (ISL_L_0, ISL_L_1, ISL_L_2).

5. Procédé selon la revendication 2, dans lequel le niveau d'importance d'informations local, ISL_L_0, et un premier niveau d'importance d'informations de saut, ISL_L_1, sont inclus en tant que valeur(s) ISL dans un conteneur de gestion CPM et un second niveau d'importance d'informations de saut, ISL_L_2, n'est pas inclus dans le conteneur de gestion CPM.

6. Procédé selon l'une des revendications 2 à 5, dans lequel l'intervalle de temps prédéterminé présente une valeur par défaut de 1 seconde, le niveau d'importance d'informations local, ISL_L_0, et le premier niveau d'importance d'informations de saut, ISL_L_1, présentent chacun une valeur de 1 à 16 et une taille de 1 octet.

7. Procédé selon l'une des revendications précédentes, dans lequel l'ITS-S est un véhicule ou une unité de bord de route, RSU.

8. Procédé selon l'une des revendications précédentes, dans lequel la communication sans fil est une communication directe de véhicule à X, VAX.

9. Système de transport intelligent coopératif pour le calcul d'un niveau d'importance d'informations, ISL, de message de perception collective, CPM, dans un système de transport intelligent coopératif, C-ITS, utilisant un canal de communication sans fil pour transmettre, recevoir, traiter et/ou rejeter une pluralité de messages de perception collective, CPM, contenant des informations sur des capteurs embarqués et/ou des objets détectés par lesdits capteurs embarqués dans un environnement de trafic,
ledit système de transport intelligent coopératif comprenant :

une unité de calcul conçue pour calculer

une valeur d'indice de signification de message de perception collective, CSI, pour chaque CPM rempli de données d'objet des objets détectés dans un champ de vision, FOV, d'au moins un capteur disposé au niveau d'une station de système de transport intelligent, ITS-S, ou inclus dans un message partagé reçu d'une autre ITS-S comme étant présent dans la portée de communication de l'ITS-S ; et
le niveau d'importance d'informations, ISL, sur le canal sur la base des valeurs CSI pour tous les CPM reçus ; et

une unité de partage conçue pour partager l'ISL calculé avec d'autres ITS-S, dans lequel

l'indice d'importance, SI, est calculé par un service de perception collective, CPS, sur la base de données obtenues au niveau d'une station de système de transport intelligent, ITS-S, hôte concernant un objet détecté, dans lequel de telles données incluent au moins un élément parmi une cinématique, une nouveauté, un temps écoulé depuis la dernière mise à jour, une classification, une confiance de détection, et/ou en fonction des besoins des autres ITS-S, et
le niveau d'importance d'informations, ISL, comprend la détermination d'un niveau d'importance d'informations local, ISL_L_0, sur le canal à partir des valeurs d'indice d'importance de message, CSI, pour tous les CPM reçus sous la forme d'une valeur de saut zéro locale par calcul de la moyenne des valeurs CSI de tous les CPM reçus dans un intervalle de temps prédéterminé.

10. Système mis en œuvre par ordinateur pour le calcul d'un niveau d'importance d'informations, ISL, de message de perception collective, CPM, dans un système de transport intelligent coopératif, C-ITS, utilisant un canal de communication sans fil pour transmettre, recevoir, traiter et/ou rejeter une pluralité de messages de perception collective, CPM, contenant des informations sur des capteurs embarqués et/ou des objets détectés par lesdits capteurs embarqués dans un environnement de trafic,

ledit système mis en œuvre par ordinateur comprenant une mémoire pour stocker des instructions qui, lorsqu'elles sont exécutées par un processeur, amènent le processeur à réaliser les étapes de calcul d'une valeur d'indice d'importance de message de perception collective, CSI, pour chaque CPM rempli de données d'objet des objets détectés dans un champ de vision, FOV, d'au moins un capteur disposé au niveau d'une station de système de transport intelligent, ITS-S, ou inclus dans un message partagé reçu d'une autre ITS-S comme étant présent dans la portée de communication de l'ITS-S ;

calcul du niveau d'importance d'informations, ISL, sur le canal sur la base des valeurs CSI pour tous les CPM reçus ; et

partage de l'ISL calculé avec d'autres ITS-S, dans lequel

l'indice d'importance, SI, est calculé par un service de perception collective, CPS, sur la base de données obtenues au niveau d'une station de système de transport intelligent, ITS-S, hôte concernant un objet détecté, dans lequel de telles données incluent au moins un élément parmi une cinématique, une nouveauté, un temps écoulé depuis la dernière mise à jour, une classification, une confiance de détection, et/ou en fonction des besoins des autres ITS-S, et

le niveau d'importance d'informations, ISL, comprend la détermination d'un niveau d'importance d'informations local, ISL_L_0, sur le canal à partir des valeurs d'indice d'importance de message, CSI, pour tous les CPM reçus sous la forme d'une valeur de saut zéro locale par calcul de la moyenne des valeurs CSI de tous les CPM reçus dans un intervalle de temps prédéterminé.

Fig. 1

**Fig. 2**

**CPS**

From DCC

Available
channel
resources

From on-board sensors

Sensor
characteristics
such as FOVs,
objects,
free-space

| CPM Transmission management |
| --- |

| CPM Reception management |
| --- |

**CPM Encoding**
- Construct the CPM based on
  - Data from own sensors
  - Objects sent by other ITS-Ss in their CPMs
  - CAMs sent by other ITS-Ss

CPM data

**CPM Decoding**
- Decode received CPMs including

Inside the ITS-S | Outside the ITS-S

CAMs

CPMs

*Fig. 3*

Inside the ITS-S | Outside the ITS-S

**CPS**

CPM Transmission management
- *Transmission management based on CSI*

From DCC

Available channel resources

CPM Reception management
- *Reception management based on CSI*

From on-board sensors

Sensor characteristics such as FOVs, objects, free-space

CPM Encoding
- Construct the CPM based on
  - Data from own sensors
  - Objects sent by other ITS-Ss in their CPMs
  - CAMs sent by other ITS-Ss
  - *Own APRs*
- *Calculate OSI based on object data and need of other ITS-Ss (based on their FOVs and APRs) and populate this value for each object in CPM PDU*
- *Fill a CPMs 'intelligently' based on OSI*
- *Calculate CSI for the CPM and populate the value in CPM PDU*

CPM data

CAMs

CPM Decoding
- Decode received CPMs *including FOVs, APRs, CSI and OSI*

CPMs

*Fig. 4*

EP 4 167 607 B1

**Fig. 5**

EP 4 167 607 B1

```
┌─────────────────────────────┐
│ CPS receives data from      │
│ sensors (and CAMs/CPMs of   │
│ other ITS-Ss)               │
└─────────────────────────────┘
              │
              ▼
┌─────────────────────────────┐
│ CPS creates CPM (CPM        │
│ composition and rate are    │
│ adapted based on CPM        │
│ generation rules)           │
└─────────────────────────────┘
              │
              ▼
┌─────────────────────────────┐
│ CPM traverses the stack     │
│ though networking to access │
│ layer                       │
└─────────────────────────────┘
              │
              ▼
┌─────────────────────────────┐
│ Access layer either sends   │
│ or drops the CPM depending  │
│ on current channel load     │
│ (Access Layer DCC function  │
│ DCC_ACC)                    │
└─────────────────────────────┘
```

**Repetition Rate:**

$T\_GenCpmMin \leq T\_GenCpm \leq T\_GenCpmMax$, where $T\_GenCpmMin$ = 100 ms and $T\_GenCpmMax$ = 1000 ms

**Content:**
1. If the assigned object class of highest confidence does <u>not correspond to either the person or animal class</u>:
   - a. The object has first been detected by the perception system after the last CPM generation event
   - b. The Euclidian absolute distance between the current estimated position of the reference point of the object and the estimated position of the reference point of this object lastly included in a CPM exceeds 4 m
   - c. The difference between the current estimated ground speed of the reference point of the object and the estimated absolute speed of the reference point of this object lastly included in a CPM exceeds 0.5 m/s
   - d. The difference between the orientation of the vector of the current estimated ground velocity of the reference point of the object and the estimated orientation of the vector of the ground velocity of the reference point of this object lastly included in a CPM exceeds 4 degrees
   - e. The time elapsed since the last time the object was included in a CPM exceeds $T\_GenCpmMax$

2. If the assigned object class of highest confidence <u>corresponds to either the person or animal class</u>:

   - a. A new object (of class person or animal) is detected after the last CPM generation event
   - b. If the object list contains at least one object of class person or animal which has not been included in a CPM in the past 500 ms, all objects of class person or animal should be included in the currently generated CPM.

*Fig. 6A*

EP 4 167 607 B1

```
┌─────────────────────┐          ┌──────────────────┐          ┌──────────────────────┐
│ CPS receives data   │          │                  │          │ Determine Information│
│ from sensors        │          │ Calculate SI for │          │ Significance Load    │
│ (and CAMs/CPMs of   │─────────▶│ detected objects │          │ (ISL_L_0) on the     │
│ other ITS-Ss)       │          │                  │          │ channel, based on    │
└─────────────────────┘          └──────────────────┘          │ the CSIs for the     │
         │                                │                     │ received CPMs.       │
         │                                ▼                     └──────────────────────┘
         ▼                       ┌──────────────────┐                      │
┌─────────────────────┐          │ Fill CPM with    │                      ▼
│ CPS creates CPM (CPM│          │ objects          │          ┌──────────────────────┐
│ composition and rate│◀─────────│ according to     │          │ Calculate ISL_L_1,   │
│ are adapted based on│          │ object SI and    │          │ ISL_L_2; Determine   │
│ CPM generation      │          │ calculate SI for │          │ ISL_G = max (ISL_L_0,│
│ rules)              │          │ CPM              │          │ ISL_L_1, ISL_L_2)    │
└─────────────────────┘          └──────────────────┘          └──────────────────────┘
         │                                                                 │
         ▼                                                                 ▼
┌─────────────────────┐                                        ┌──────────────────────┐
│ CPM traverses the   │◀───────────────────────────────────────│ Add ISL_L_0 and      │
│ stack though        │                                        │ ISL_L_1 to CPM       │
│ networking to       │                                        │ management container │
│ access layer        │                                        └──────────────────────┘
└─────────────────────┘
         │
         ▼
┌─────────────────────┐
│ Access layer either │
│ sends or drops the  │
│ CPM depending on    │
│ current channel load│
│ (Access Layer DCC   │
│ function DCC_ACC)   │
└─────────────────────┘
```

*Fig. 6B*

Vehicle

Object 2          Object 1

Sensor FOV

Object

Direction of
movement

*Fig. 7*

Vehicle 2

Object 2

Vehicle 1

Object 1

Sensor FOV

Object

*Fig. 8*

**Fig. 9**

Fig. 10

**Start** —100

Detect a plurality of objects present within
a sensor field of view or shared as
being present in the vicinity of the station —110

Obtain object data of each detected object from
sensor and/or shared message —120

Calculate O-SI for each detected object
based on object data —130

Fill CPM with objects according calculated O-SI —140

Calculate CPM-SI for each CPM filled with objects —150

Determine available channel resources —160

Transmit CPM in accordance with channel
resources starting with CPM with highest CPM-SI —170

**End** —180

*FIG. 11*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102015105784 A1
- EP 3462754 A1
- WO 2021040352 A1
- GB 2583726 A
- EP 3829200 A2